# EUROPEAN PATENT APPLICATION

(11) **EP 1 727 139 A1**
(43) Date of publication of application: **29.11.2006**
(21) Application number: 05720798.7
(22) Date of filing: 15.03.2005
(51) Int. Cl.: G11B 7/26, G11B 7/24

(54) **MULTILAYER INFORMATION RECORDING MEDIUM AND PROCESS FOR PRODUCING THE SAME**

(30) Priority: 15.03.2004 JP 2004072545
(71) Applicant: MATSUSHITA ELECTRIC INDUSTRIAL CO., LTD., Kadoma-shi, Osaka 571-8501 (JP)
(72) Inventor: TOMIYAMA, Morio, Chuo-ku, Osaka-shi, Osaka 540.-6319 (JP); NISHIKIORI, Keiji, Chuo-ku, Osaka-shi, Osaka 540-6319 (JP)
(74) Representative: TBK-Patent
(86) International application number: PCT/JP2005/004541
(87) International publication number: WO 2005/088629

(57) **Abstract**

The invention relates to a method for manufacturing a multi-layer information recording medium, including the steps of: forming a thin-film layer on an information surface of a substrate having the information surface; placing a photo-curing resin film and a light transmissive resin stamper on the first thin-film layer followed by pressing; curing the photo-curing resin film by allowing light to pass through the light transmissive resin stamper; forming an information surface by stripping the light transmissive resin stamper from the cured photo-curing resin film; and forming an information layer by covering the information surface with a thin-film layer, wherein the light transmissive resin stamper has a transfer surface used to form the information surface, and a metal thin film is formed on the transfer surface.

When a multi-layer information recording medium is manufactured by this manufacturing method, because new information layers can be successively layered from the same surface side, the fabrication sequence can be simplified, which enables in turn to save the manufacturing costs. Also, because the thin-film layer is formed on the surface of the stamper, the stamper alone can be readily stripped from the cured photo-curing resin film with a relative small force. It is thus possible to obtain a multi-layer information recording medium having so high dimensional accuracy without causing stripping in any other layer.

## Description

### TECHNICAL FIELD

The present invention relates to an information recording medium to reproduce or to record and reproduce information, and a method for manufacturing the same.

### BACKGROUND ART

A compact disc (CD), a digital versatile disc (DVD), a Blu-ray disc (BD), etc. have been known as an information recording medium processed in various kinds of information processing apparatus, such as information equipment and audio-video equipment.

However, a volume of information processed in each information processing apparatus has been increasing drastically in recent years, and there has been a need for an information recording medium having a further higher density to enable data processing of a large volume.

A multi-layer information recording medium that increases a volume of information by multi-layering the information layer for recording information in the thickness direction has been under development as means for achieving an information recording medium of a higher density.

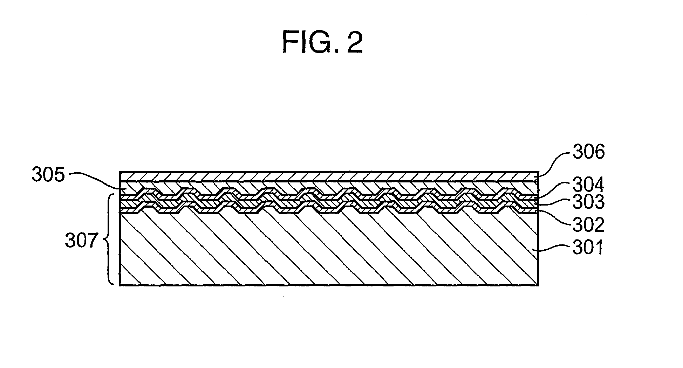

FIG. 2 shows the configuration of a typical multi-layer information recording medium.

The multi-layer information recording medium shown in FIG. 2 comprises a first information substrate 301 having an information surface provided with information grooves, a first thin-film layer 302 formed on the information surface of the first information substrate 301, a second signal layer 303 having a second information surface and formed on the thin-film layer 302, a second thin-film layer 304 formed on the information surface of the second signal layer 303, a transparent layer 305 provided to laminate a transparent substrate 306 to the second thin-film layer 304, and the transparent substrate 306.

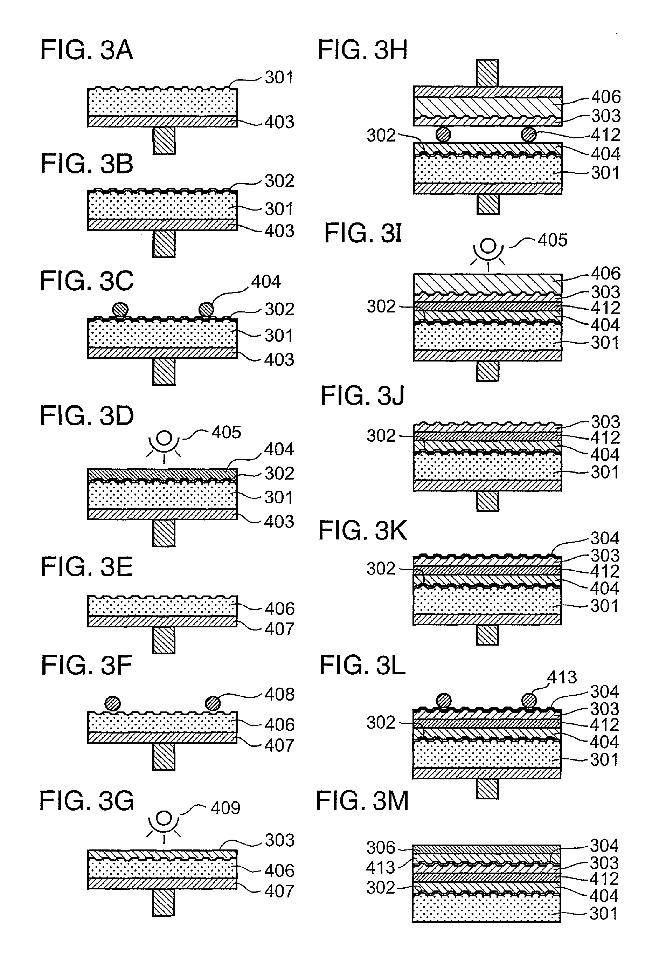

The fabrication sequence of the multi-layer information recording medium in the related art will now be described with reference to FIG. 3.

Initially, the first information substrate 301 is molded through injection (compression) molding using a metal mold for injection molding in which a metal stamper is attached to the cavity (not shown).

The first information substrate 301 is normally a disc-shaped substrate made of transparent resin and having a thickness of about 1.1 mm, and an information surface transferred from the metal stamper is formed on one surface thereof.

The first information substrate 301 obtained in the preceding step is fixed to a rotary table 403 by means of vacuum or the like (FIG. 3A).

Subsequently, the first thin-film layer 302 is formed on the information surface of the first information substrate 301 (FIG. 3B). The thin-film layer is normally formed by means of sputtering or vapor deposition. The first thin-film layer 302 is a thin-film layer including a recording film and a reflection film.

Further, UV-curing resin 404 is subjected to spread coating on the first thin-film layer 302 (FIG. 3C). The spin coat method is adopted for the spread coating.

A UV ray irradiator 405 irradiates UV rays to the UV-curing resin 404 provided by means of spread coating from above, so that the UV-curing resin 404 is cured (FIG. 3D).

Meanwhile, a stamper 406 is fixed to another rotary table 407 (FIG. 3E).

Subsequently, photo-curing resin 408 is subjected to spread coating on the stamper 406 using the spin coat method (FIG. 3F).

A UV ray irradiator 409 irradiates UV rays to the photo-curing resin 408 subjected to spread coating from above, so that the photo-curing resin 408 is cured to form the second signal layer 303 having the second information surface (FIG. 3G).

Subsequently, photo-curing resin 412 is subjected to spread coating on the photo-curing resin 404, and the second signal layer 303 is laminated thereon (FIG. 3H).

UV rays are irradiated to the stamper 406 from above, so that the photo-curing resin 412 is cured to bond the photo-curing resin 404 and the second signal layer 303 (FIG. 3I).

Subsequently, the stamper 406 is stripped (FIG. 3J). In this instance, because the stamper 406 has to be stripped only at the interface with the second signal layer 303, it is necessary to choose materials so that an adhesive force between the photo-curing resin 412 and the second signal layer 303 is higher than an adhesive force between the stamper 406 and the second signal layer 303.

The second thin-film layer 304 is then formed on the second information surface of the second signal layer 303 that is exposed as a result of the stripping (FIG. 3K), and a photo-curing resin 413 is further provided thereon by means of spread coating (FIG. 3L), to which the transparent substrate 306 forming the outermost layer is laminated, and then a multi-layer information recording medium is formed by curing the photo-curing resin 413 with UV rays (FIG. 3M).

However, in a case where respective layers are formed by subjecting a liquid of photo-curing resin to spread coating using the spin coat method followed by curing as in the steps described above, it is difficult to control film thickness to be uniform, which causes a minute variance of the film thickness in the circumferential direction and a significant variance of the film thickness in the radius direction. In a case where plural information layers are laminated, a variance of the film thickness in each layer is added up, and a variance of the film thickness as a whole becomes large. When a signal is recorded or reproduced, such a variance of the film thickness gives adverse effects to a aperture variance control of a light spot, a focus control of a light spot on a signal surface, or a tracking control to allow a light spot to follow a signal sequence.

As means for solving these problems, instead of subjecting a photo-curing resin to spread coating, a method using a photo-curing resin film has been developed.

A film containing an adhesive, made by mixing a pressure sensitive adhesive (PSA) chiefly made of acrylic copolymer, photo-curing resin, such as photo-curing resin, and a photo-curing initiator, is used as the photo-curing resin film. Such a photo-curing resin film is highly adhesive before it cures; however, once it has cured, it loses the adhesion and the stripping property with respect to metal materials is enhanced significantly. In addition, the accuracy of thickness of layers formed by using the photo-curing resin film is markedly high in comparison with that by using the spread coating of a photo-curing resin.

As a method of manufacturing a multi-layer information recording medium by using a photo-curing resin film, for example, Patent Document 1 (JP-A-2003-228891) discloses a technique, according to which a substantially disc-shaped medium substrate having a concave-convex surface and a center hole at the center is formed; a first optical recording layer is formed on the concave-convex forming surface; an intermediate layer comprising a photo-sensitive resin film is formed on the upper layer thereon; photo-curing is processed while a stamper having a concavo-convex shape on one surface is placed onto the intermediate layer; and the stamper alone is stripped later so that the concave-convex shape is transferred onto the surface of the intermediate layer.

As a first embodiment of the stamper used in the disclosed technique, a stamper made of metal, such as nickel, is used (paragraph [0045]).

In a case where the concavo-convex shape is formed using the metal stamper as described above, because metal has a good stripping property with respect to resin, the stamper can be readily stripped from the intermediate layer formed by curing the resin film.

In a case where the metal stamper is used, however, the stamper per se cannot transmit light. It is thus necessary to cure the resin film by irradiating light from the surface opposite to the surface on which the stamper is placed, that is, from the side of the light transmissive medium substrate. In this case, when a recording film and a reflection film have been formed as information layers on the surface opposite to the surface on which the stamper is placed, sufficient light is not allowed to pass through from the side of the medium substrate, which makes it impossible to cure the resin film.

Hence, in this case, an information layer has to be manufactured separately in advance, and laminated later by subjecting the photo-curing resin to spread coating.

In this case, there are defects that the fabrication sequence becomes complicated, and the film thickness becomes irregular.

Patent Document 1 also uses a resin stamper made of amorphous polyolefin as a second embodiment (paragraphs [0052] through [0055]).

With the use of the resin stamper, a new information layer can be formed by curing the resin film with irradiation of UV rays via the stamper.

The resin stamper, however, has a poor stripping property with respect to the resin film. Hence, when the stamper is stripped after the resin film is cured, a force is applied to the medium substrate excessively, which may possibly give rise to warpage and distortions or stripping at the interface with another layer at which stripping should not take place. Accordingly, a reading or recording mistake may possibly occur in the resultant multi-layer information recording medium.

Further, Patent Document 1 discloses a following technique as a third embodiment (paragraphs [0057] and [0058]).

That is, initially, an intermediate layer is formed by pressing a resin stamper having an optical recording layer on the surface to a resin film to transfer a concavo-convex pattern on the surface of the resin film. Subsequently, the intermediate layer is cured by irradiating UV rays over the resin stamper and the optical recording layer formed on the surface thereof while the resin stamper is kept press to the intermediate layer. The resin stamper is then stripped at the interface to the optical recording layer, so that not only is the concavo-convex pattern transferred onto the surface of the intermediate layer, but also the optical recording layer is formed thereon.

However, in a case where a new information layer is formed using the transfer forming method as described above, the optical recording layer cannot be stripped from the resin stamper precisely unless the optical recording layer is relatively thick (for example, 80 nm or thicker).

In other words, for example, in a case where an optical recording layer comprising a relatively thin film (for example, thinner than 80 nm) is transferred onto the concavo-convex surface, the thin film may be broken or part of the thin film may reside on the surface of the resin stamper, which makes it difficult to form a precise thin-film layer.

Meanwhile, in a case where the optical recording layer is relatively thick, it does not transmit UV rays easily, which makes it difficult to cure the resin film via the stamper. Also, in the method described above, when the optical recording layer per se is of a multi-layer structure including a reflection film, a dielectric film, a recording film, etc., not all the layers can be transferred when an adhesion strength between the respective layers is weak, which may give rise to stripping of layers within the optical recording layer. Further, in a case where a resin stamper having high dimensional accuracy is molded and this resin stamper is used for transferring plural layers, the resin stamper per se has to undergo thin-film forming processing, such as sputtering, as many times as the number of layers to be transferred, and thus this causes a difference in the dimensional accuracy of the resin stamper per se due to heat history or the like and as a result, it is difficult to obtain a multi-layer information recording medium having high dimensional accuracy.

### DISCLOSURE OF THE INVENTION

In order to solve these problems, the inventors discovered that a multi-layer information recording medium having high dimensional accuracy can be readily obtained by transferring an information surface on a photo-curing resin sheet using a light transmissive resin stamper covered with a metal thin film on the surface of the transfer surface when manufacturing the multi-layer information recording medium.

That is, the invention relates to a method for manufacturing a multi-layer information recording medium, including: a first step of covering a first information surface of a substrate having the first information surface with a first thin-film layer; a second step of placing a photo-curing resin film on the first thin-film layer, and placing a light transmissive resin stamper on the film followed by pressing; a third step of curing the photo-curing resin film by allowing light to pass through via the light transmissive resin stamper; a fourth step of forming a second information surface by stripping the light transmissive resin stamper from the cured photo-curing resin film; and a fifth step of forming an information layer by covering the second information surface formed in the fourth step with a second thin-film layer, wherein the light transmissive resin stamper has a transfer surface for forming the second information surface, and a metal thin film is formed on the transfer surface.

According to the manufacturing method of the invention, even in a case where the photo-curing resin film is cured after the light transmissive resin stamper is pressed on the photo-curing resin film to form the information surface thereon, curing can take place upon irradiation of UV rays from the light transmissive resin stamper side. Hence, when a multi-layer information recording medium formed of plural information layers is manufactured, new information layers can be layered continuously in succession from the same surface side without the need for the step of laminating information layers that have been formed separately, and the fabrication sequence can be thus made simpler, which can in turn save the manufacturing costs.

Also, because the thin-film layer is formed on the surface of the light transmissive resin stamper, the light transmissive resin stamper can be readily stripped from the cured photo-curing resin film. It is thus possible to obtain a multi-layer information recording medium having high dimensional accuracy without causing stripping or the like in any other layer.

Further, because the stamper can be obtained through injection (compression) molding of resin, even when plural stampers are copied, they can be manufactured at a low cost.

Moreover, by repeating the second through fifth steps more than once on the thin-film layer that has been formed previously, plural information layers can be formed.

With the manufacturing method as above, it is possible to provide a multi-layer information recording medium that has a less variance in the optical path length for a reading or recording laser beam or the like when it passes through the respective information layers and suppresses a aberration-induced variance in aperture of a light spot, thereby having the capability of stabilizing the focus control and the tracking control.

### BRIEF DESCRIPTION OF THE DRAWINGS

FIG. 1 shows an example of a cross section of a multi-layer information recording medium of the invention;
FIG. 2 is a cross section of a multi-layer information recording medium in the related art;
FIG. 3 is a cross section showing the fabrication sequence of a manufacturing method of the multi-layer information recording medium in the related art;
FIG. 4 is a cross section showing the configuration of a phase-change recording film;
FIG. 5 is a cross section showing an example of the fabrication sequence of a manufacturing method of a multi-layer information recording medium of the invention;
FIG. 6 is a schematic view showing a state where respective information layers are sealed by a transparent layer in one embodiment of the invention;
FIG. 7 is a graph showing a relation between a temperature and a pressing force of a roller and a depth of transferred grooves in a second embodiment;
FIG. 8 is a graph showing a relation between a temperature and a pressing force of the roller and warpage of the multi-layer information recording medium in the second embodiment; and
FIG. 9 is a schematic view showing a measuring method of a quantity of warpage of the multi-layer information recording medium in the second embodiment.

### BEST MODE FOR CARRYING OUT THE INVENTION

### (First Embodiment)

Hereinafter, concrete embodiments of the invention will be described.

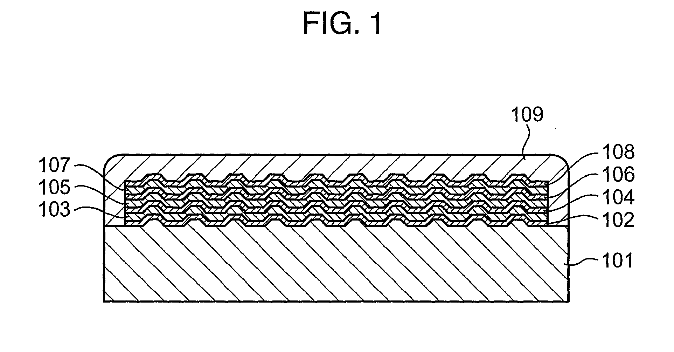

FIG. 1 shows the structure of a multi-layer information recording medium having four information layers as an example of a multi-layer information recording medium of the invention.

The multi-layer information recording medium comprises a substrate 101 having a first information surface(hereinafter, referred to also as the first information substrate 101), a first thin-film layer 102 formed on the information surface of the first information substrate 101, a second signal layer 103, a second thin-film layer 104 formed on the information surface of the second signal layer 103, a third signal layer 105, a third thin-film layer 106 formed on the information surface of the third signal layer 105, a fourth signal layer 107, a fourth thin-film layer 108 formed on the information surface of the fourth signal layer 107, and a transparent layer 109 formed on the fourth thin-film layer 108.

The first information substrate 101 has the information surface provided with information grooves, such as pits and guiding grooves.

Also, the second signal layer 103, the third signal layer 105, and the fourth signal layer 107 are formed of a photo-curing resin film by a manufacturing method described below.

Hereinafter, a case where a multi-layer information recording medium having four information layers will be described as one example of the method for manufacturing the multi-layer information recording medium of the invention.

The method for manufacturing the multi-layer information recording medium of the invention includes: a first step of forming a first thin-film layer on a first information surface of a substrate having the first information surface; a second step of placing a photo-curing resin film on the first thin-film layer, and placing a light transmissive resin stamper thereon followed by pressing; a third step of curing the photo-curing resin film by allowing light to pass through the light transmissive resin stamper; a fourth step of forming a second information surface by stripping the light transmissive resin stamper from the cured photo-curing resin film; and a fifth step of forming an information layer by covering a surface of the second information surface formed in the fourth step with a second thin-film layer.

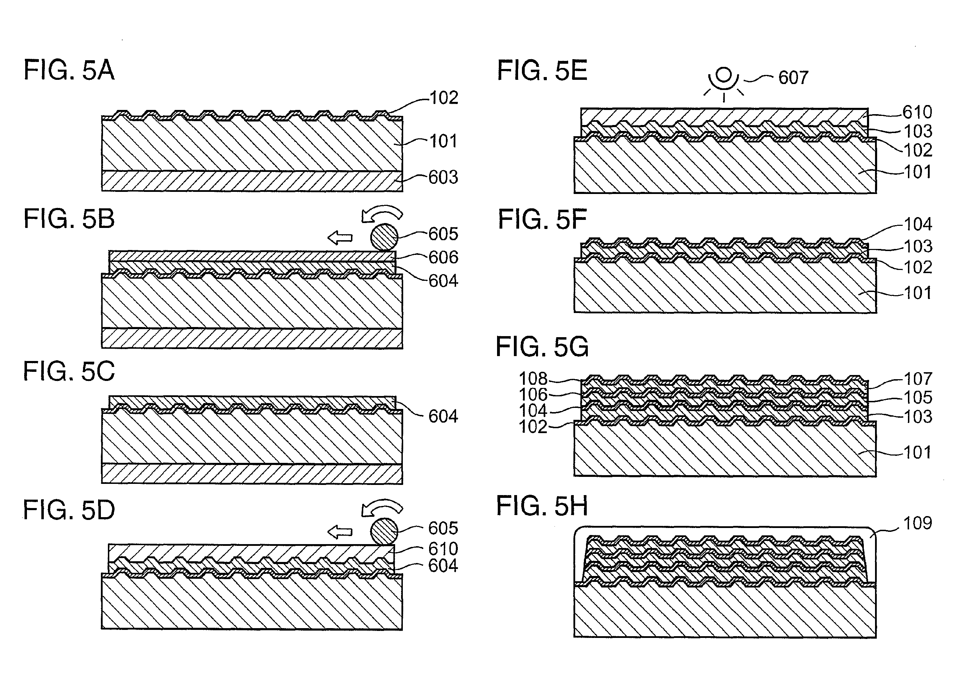

FIG. 5 shows a schematic view of the fabrication sequence.

The first step of the invention is the step of forming the first thin-film layer on the information surface of the first information substrate.

Referring to FIG. 5, the first information substrate 101 is a transparent resin substrate having an information surface on at least one surface.

Materials that have been used as a transparent substrate of an optical disc, to be more specific, a polycarbonate resin material, (meth)acrylic resin, polyolefin resin, etc. can be used as materials of the first information substrate 101, and a polycarbonate resin material is preferred in terms of the light transmissivity.

The first information substrate 101 is formed by injection (compression) molding or the like using a metal mold in which a metal stamper is attached to the cavity (not shown).

A shape of the first information substrate 101 is not particularly limited, and to be more specific, for example, it may be a disc-like shape having a center hole as adopted in the manufacturing of a CD, a DVD, a BD, etc., or it may be a card-like shape as adopted in the manufacturing of a memory card.

A thickness of the first information substrate is not particularly limited, though, the thickness is preferably about 1.0 to 1.1 mm when it has a disc-like shape by taking compatibility with a CD, a DVD, a BD, etc. into account.

In the first step, the first thin-film layer 102 is formed on the information surface of the first information substrate 101 (see FIG. 5A).

The first thin-film layer 102 is a thin-film layer including a recording film and a reflection film, and it is formed by means of sputtering or vapor deposition.

The concrete configuration of the first thin-film layer 102 includes an example as follows.

In a case where a ROM (Read Only Memory) is manufactured as a multi-layer information recording medium, a thin film having a reflection characteristic with respect to a laser beam to be used to reproduce , for example, a metal thin film, a semiconductor thin film, or a dielectric thin film, such as Al, Ag, Au, Si, SiO₂, is formed.

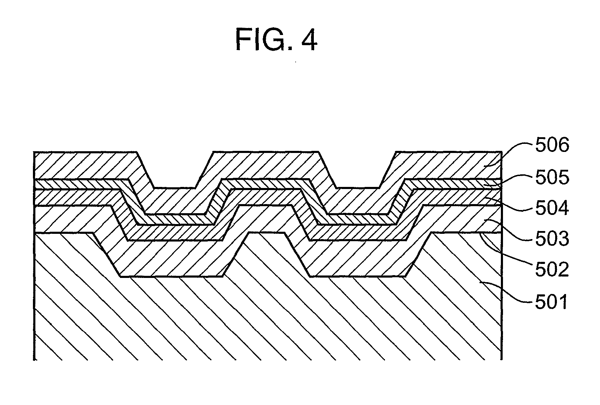

Meanwhile, in a case where a recordable multi-layer information recording medium is manufactured as a multi-layer information recording medium, a phase-change recording film as is shown in FIG. 4 is formed.

Referring to FIG. 4, a reflection film 503 made of Al, a dielectric film 504 made of ZnS-SiO₂, a phase-change recording film 505 made of Ge, Sb, Te, etc. , and a dielectric film 506 made of ZnS- SiO₂, are formed on an information surface 502 of a first information substrate 501.

The reflection film 503 is formed to have the optimum thickness due to the needs to release heat generated when signal is recorded in an appropriate manner and to form a recording mark in the optimum manner.

In addition, in a case where the multi-layer information recording medium is a WO (write-once) medium, a dye layer or the like is formed as the recording film.

The second step of the invention is the step of placing the photo-curing resin film on the first thin-film layer, and placing the light transmissive resin stamper thereon followed by pressing.

In the second step, a method (hereinafter, referred to as the second step A), by which the photo-curing resin film is placed on the thin-film layer and laminated to the thin-film layer by pressing, and then, the light transmissive resin stamper is further placed thereon and the light transmissive resin stamper is pressed, or a method (hereinafter, referred to as the second step B), by which the photo-curing resin film and the light transmissive resin stamper are placed on the thin-film layer, and then the light transmissive resin stamper is pressed, is used.

Alternatively, another method, by which the transfer surface of the stamper has been transferred previously on the photo-curing resin film by pressing the stamper, and then the photo-curing resin film is placed on the thin-film layer followed by pressing, may be used.

The second step A will be described as a representative example in this embodiment.

A photo-curing resin film 604 is placed on the first thin-film layer 102, and the photo-curing resin film 604 is pressed over a protection sheet 606 using a roller 605, so that they are laminated (see FIG. 5B).

Subsequently, the protection sheet 606 is stripped, and the light transmissive resin stamper 610 is placed, followed by pressing over a light transmissive resin stamper 610 using the roller 605 (see FIG. 5D).

Light is then irradiated to pass through the light transmissive resin stamper 610 for curing the photo-curing resin film (see FIG. 5E).

The second step B adopts the method, by which the photo-curing resin film 604 is placed on the first thin-film layer 102 and the protection sheet 606 is optionally stripped, and then, the light transmissive resin stamper 610 is placed thereon, and it is pressed over the light transmissive resin stamper 610 using the roller 605, and finally, light is irradiated to pass through the light transmissive resin stamper 610 for curing the photo-curing resin film.

The second step B is preferred because the fabrication sequence can be simplified.

The photo-curing resin film is a resin film having a property that it cures upon irradiation of light, and an example includes a UV-curing resin film that cures with UV rays. To be more concrete, examples include, a UV-curing resin film made of a base material, such as polyolefin, and a photo-curing acrylic adhesive, that is, SURPHEX (trade name) (available from Du Pont), and a UV tape of a UV-curing type (for example, the one available from Furukawa Electric Co., Ltd.).

As a thickness of the photo-curing resin film, 5 to 25 µm is preferable. When the thickness is less than 5 µm, the photo-curing resin film may be broken by a pressing force conferred from the stamper or heat from the roller used for pressing; when the thickness exceeds 25 µm, contraction resulted from photo-curing is so large that it is difficult to adjust the flatness of the resultant multi-layer information recording medium and, the multi-layer information recording medium tends to be excessively thick when plural information layers are formed in the thickness direction.

As one example, the photo-curing resin film 604 is laminated in the following manner.

The photo-curing resin film 604 is available in a state where the both surfaces are protected with the protection sheet 606, so that, for example, it is protected from an impact from the outside or adhesion of powder dust or the like. The protection sheet 606 comprises a resin film made of polyethylene or polyethylene terephthalate and having a thickness of about 60 µm.

Immediately before the photo-curing resin film 604 is placed on the first thin-film layer 102, the protection sheet 606 is stripped from only the surface on which the photo-curing resin film 604 is to be placed, and the photo-curing resin film 604 is placed on the first thin-film layer 402 (not shown).

The photo-curing resin film 604 is laminated onto the first thin-film layer 402 by running the roller 605 on the protection sheet 606 on the surface where it is not stripped (see FIG 5B).

After the photo-curing resin film 604 is laminated to the first thin-film layer 402, the protection sheet 606 is stripped (see FIG. 5C).

Subsequently, the light transmissive resin stamper 610 is laminated onto the photo-curing resin film 604 (see FIG. 5D). In this instance, the light transmissive resin stamper 610 is placed in such a manner that the information surface opposes the photo-curing resin film 604, and is laminated onto the photo-curing resin film 604 by running the roller 605 on the light transmissive resin stamper 610 with pressing (see FIG. 5D).

The light transmissive resin stamper of the invention will now be described.

The light transmissive resin stamper of the invention is obtained by forming a metal thin film on the transfer surface of a stamper made of light transmissive resin and having the transfer surface on at least one surface. The transfer surface referred to herein is a surface provided to transfer and form the information grooves, such as pits and guiding grooves, on the photo-curing resin film.

The light transmissive resin stamper has an excellent stripping property with respect to the cured photo-curing resin film because of the metal thin film formed on the transfer surface. The light transmissive resin stamper can be therefore readily stripped only at the interface with the cured photo-curing resin film, and does not cause stripping of any other surface. This provides excellent dimensional accuracy to the resultant multi-layer information recording medium.

In a case where a new information surface is formed using the light transmissive resin stamper as described above, the need for the step as the conventional art of laminating the information surfaces that have been formed separately, using the photo-curing resin or the like can be eliminated, and new information layers can be formed by successively laminating the new information layers on the information layer formed earlier in continuous steps, and the fabrication sequence can be thus made simpler.

The stamper made of light transmissive resin can be formed by subjecting transparent resin to injection (compression) molding using a metal mold in which the metal stamper is attached to the cavity.

Light transmissive materials, in particular, those having excellent UV ray transmissivity, such as polycarbonate resin, (meth)acrylic resin, and polyolefin resin, are chosen as the transparent resin.

A thickness of the stamper made of the light transmissive resin is not particularly limited; to be more specific, however, in order to transmit light, in particular, UV rays sufficiently, the thickness is preferably about 0.3 to 1.1 mm.

Formation of the metal thin film on the transfer surface of the stamper made of light transmissive resin will now be described.

The metal thin film is formed to strip the stamper from the cured body of the photo-curing resin film with ease.

The metal thin film is formed by depositing a metal material onto the transfer surface by means of sputtering or vapor deposition.

Examples of the metal material include metal materials having a good stripping property with respect to the cured body of the photo-curing resin film 604, to be more concrete, metal materials containing silver (Ag), aluminum (Al), gold (Au), nickel (Ni), copper (Cu), etc. as a main component.

Of these metal materials, metal materials containing silver or aluminum as a main component are particularly preferable in terms of the stripping property.

In addition, for the metal thin film formed on the light transmissive resin stamper 610, it is preferable to choose materials and the surface property in such a manner that an adhesion strength between the cured body of the photo-curing resin film 604 and the light transmissive resin stamper 610 is smaller than an adhesion strength between the first thin-film layer 102 and the cured body of the photo-curing resin film 604. This is because a new information surface cannot be formed by the stripping at the interface between the first thin-film layer 102 and the cured body of the photo-curing resin film 604 when an adhesion strength between the cured body of the photo-curing resin film 604 and the light transmissive resin stamper 610 is larger than an adhesion strength between the first thin-film layer 102 and the cured body of the photo-curing resin film 604.

It is necessary to form the light transmissive resin stamper in such a manner that it transmits light of a quantity needed to cure the photo-curing resin film. To be more specific, when UV rays are used as the light, it is preferable to form the light transmissive resin stamper to have transmittance of 5 to 80%, or more preferably 10 to 50%. When the transmittance of UV rays is less than 5%, it is difficult to cure the photo-curing resin film 604 effectively, and when the transmittance exceeds 80%, a curing efficiency is reduced markedly, and neither is preferable as a practical manufacturing condition.

A thickness of the thin-film layer formed on the light transmissive resin stamper 610 is not particularly limited as far as the stamper is formed to transmit light, such as UV rays; however, the thickness is preferably about 5 to 50 nm, and more preferably about 10 to 20 nm. When the thickness is less than 5 nm, the stripping property with respect to the cured body of the photo-curing resin film tends to be unsatisfactory, and when the thickness exceeds 50 nm, the stamper does not transmit light readily, and the metal film formed on the light transmissive resin stamper may adhere to or may be transferred onto the cured UV-curing resin film when the stamper is stripped from the cured body of the photo-curing resin film, and neither is preferable.

A method of transferring and forming the transfer surface on the photo-curing resin film by pressing with the use of the light transmissive resin stamper will now be described.

To transfer and form the transfer surface, a method, by which the light transmissive resin stamper 610 is placed on the already laminated photo-curing resin film 604 and the surface is pressed by the roller 605, is adopted (see FIG. 5D).

It is preferable that a temperature of the roller surface of the roller 605 can be adjusted. In other words, the photo-curing resin film 604 can be softened by heating the photo-curing resin film 604 with the use of the roller 605. In this case, because the transfer surface can be transferred at a relatively low pressing force, the thickness of the UV resin film 604 can be maintained to be relatively uniform, which consequently makes it possible to reduce warpage of the resultant multi-layer information recording medium.

When the temperature of the roller surface is too high, the dimension of the sheet tends to vary and larger warpage tends to occur in the multi-layer information recording medium due to warpage of the first information substrate 101. When the temperature is too low, a high pressing force is needed to transfer the transfer surface completely, because the photo-curing resin film cannot be softened satisfactorily. Larger warpage therefore tends to occur in the resultant multi-layer information recording medium.

The step of curing the photo-curing resin film by allowing light to pass through the light transmissive resin stamper, that is, the third step of the invention, will now be described.

The photo-curing resin film 604, to which the light transmissive resin stamper 610 is laminated, is cured as light is allowed to pass through the light transmissive resin stamper 610.

To be more concrete, by irradiating light to the light transmissive resin stamper 610 from a light irradiator 607, light passes through the light transmissive resin stamper 610 and reaches the photo-curing resin film 604. The photo-curing resin film 604 is thus cured (see FIG. 5E).

The step of forming the second information surface by stripping the light transmissive resin stamper from the cured photo-curing resin film, which is the fourth step of the invention, will now be described.

It is possible to form the surface of the second signal layer 103 by stripping the light transmissive resin stamper 610 present on the photo-curing resin film 604 that has been cured in the third step (not shown).

For the stripping, for example, a method, by which compressed air is flown into a space between the light transmissive resin stamper 610 and the photo-curing resin film 604, is used.

Subsequently, in the fifth step, the second information layer is formed by covering the surface of the second signal layer 103, which is the second information surface, with the second thin-film layer 104 (see FIG. 5F).

The second thin-film layer 104 is formed in the same manner as the first thin-film layer 102 was formed.

In this embodiment, four information layers are formed in the thickness direction by repeating the steps same as the second step through the fifth step further twice on the thin-film layer formed in the second step (see FIG. 5G).

In a case where the method for manufacturing a multi-layer information substrate of the invention is used, a new information layer can be readily formed each time the second step through the fifth step are repeated on the information layer formed earlier as has been described.

A multi-layer information recording medium can be obtained by forming a transparent layer on the information layer present as the outermost layer among the plural information layers formed as has been described.

In this embodiment, a multi-layer information recording medium having four information layers is obtained by forming the transparent layer 109 on the fourth thin-film layer 108 formed as the outermost layer among the four information layers formed on the first information substrate 101 (see FIG. 5H).

The transparent layer 109 is a layer having high transmissivity with respect to lights of recording and reproduce, and it is a layer that protects the respective information layers.

The transparent layer 109 is formed by subjecting a liquid of photo-curing resin to spread coating using the spin coat method followed by photo-curing.

As the photo-curing resin, transparent UV-curing resin, to be more concrete, a liquid of UV-curing resin chiefly made of (meth)acrylic resin or the like, is used.

The photo-curing resin is dropped concentrically on the fourth thin-film layer 108 along a desired radius using a dispenser or the like, then subjected to spread coating using the spin coat method, and cured upon irradiation of light, such as UV rays.

A thickness of the transparent layer 109 is preferably about 30 to 60 µm.

It is preferable that the transparent layer 109 is formed, as is shown in FIG. 5H, to seal the information layers formed between the transparent layer 109 and the substrate having the first information surface. This is because when the transparent layer 109 is formed in this manner, the transparent layer 109 is capable of sealing all the layers, which can prevent stripping among respective layers.

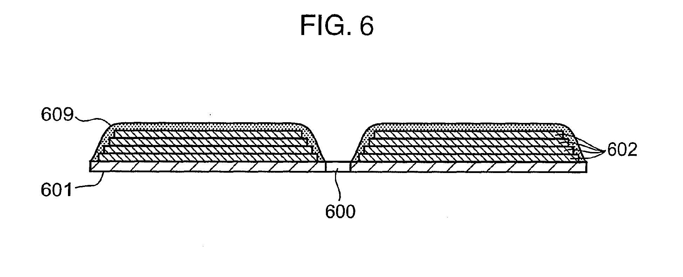

FIG. 6 shows an example of a state in which the transparent layer is formed when the multi-layer information recording medium is of, for example, a disc-like shape (hereinafter, described also as "shaped like a disc") provided with a center hole at the center for holding the multi-layer information recording medium as adopted in a CD, a DVD, and a BD.

Referring to FIG. 6, the information layers 602 comprising a photo-curing resin film or the like are sealed hermetically by applying photo-curing resin from the outer periphery of a center hole 600 in the first information substrate 601 to the edge of the first information substrate 601, so that the photo-curing resin is bonded to seal all the information layers 602, which can in turn prevent stripping of the respective layers. It is particularly preferable to use the first information substrate 601 made of polycarbonate resin because the adhesion property with respect to the photo-curing resin is high.

In order to form the transparent layer to seal all the information layers, for example, it is preferable to form the outer edge of the photo-curing resin film forming the respective information layers to be smaller than the outer edge of the substrate having the first information surface and the outer edge of the transparent layer.

Further, as is shown in FIG. 6, in a case where the substrate having the first information surface has a disk-like shape provided with the center hole, and further, the photo-curing resin film has a disc-like shape provided with the center hole, it is preferable that the inside diameter of the photo-curing resin films each is made larger than the inside diameter of the substrate having the first information surface, and that a liquid of the photo-curing resin is applied extensively onto the substrate having the first information surface that is placed medially in the center hole of the photo-curing resin film by means of spread coating.

By forming the photo-curing resin film in the manner as described above, the photo-curing resin can be applied also on the edge of the surface of the first information substrate, and because the photo-curing resin films are sealed, it is possible to prevent the photo-curing resin film from protruding from the edge of the multi-layer information recording medium as much as possible.

A dimensional difference produced between the outer edge (referred to also as the outside diameter) of the first information substrate and the outer edge of the photo-curing resin film is preferably about 0.5 to 1 mm, because not only is it possible to secure the largest possible information surface, but it is also possible to suppress protrusion of the sheet resulted from decentering when the photo-curing resin films are laminated.

In a case where the transparent layer is formed by applying the photo-curing resin by means of spread coating using the spin coat method, the photo-curing resin may rise at the outer periphery of the top surface of the transparent layer due to surface tension. When photo-curing resin is applied on a flat substrate by means of spread coating, there is known that a raised portion of the photo-curing resin is formed at the outer periphery of the substrate due to surface tension. Such raised portion poses problems, such as deterioration of the signal recording and reproducing characteristic caused by an increase of the film thickness of resin, and physical contact between the disc and the recording and reproducing head.

In order to suppress the rising of photo-curing resin due to surface tension, for example, when the multi-layer information recording medium has a disc-like shape, as is shown in FIG. 6, it is preferable to form the respective photo-curing resin films forming the information layers 602 in such a manner that the outside diameter of the photo-curing resin films each decreases with distances from the first information substrate 601 and the inside diameter of the photo-curing resin films each increases with distances from the first information substrate 601. In other words, the outside diameter of the photo-curing resin films each decreases while the inside diameter of the photo-curing resin films each increases as they come closer to the transparent layer 109 from the first information substrate 601.

Also, for the photo-curing resin films formed as has been described, a dimensional difference of each of the inside diameter and the outside diameter between the photo-curing resin films forming adjacent layers is 0.5 to 1 mm, because not only is it possible to secure the largest possible information surface, but it is also possible to suppress protrusion of the sheet resulted from decentering when the photo-curing resin films are laminated.

Because the multi-layer information recording medium obtained by the manufacturing method of the invention uses photo-curing resin films to form information layers, it achieves high dimensional accuracy; and, because it is obtained with the use of the light transmissive resin stamper on which a thin film having a good stripping property with respect to the heat-curing resin film is formed, an excessive force is not needed when the stamper is stripped, and it is thus possible to obtain a multi-layer information recording medium with a satisfactory dimensional stability.

When the multi-layer information recording medium has a disc-like shape, it is preferable that a thickness of the multi-layer information recording medium of the invention is about 1.16 to 1.5 mm in order to provide reproduce compatibility with various kinds of optical disc players for a CD, a DVD, a BD, etc.

Also, the multi-layer information recording medium of the invention is preferably a multi-layer information recording medium that includes four information layers in the thickness direction, and allows access to the four information layers from one side.

Further, for a multi-layer information recording medium having the four information layers in the thickness direction, a thickness of each information layer is preferably about 5 to 25 µm. The information layer as thin as possible is preferable because more information layers can be laminated in the thickness direction and for the purpose to reduce contraction caused by photo-curing in the step of transferring and forming the information grooves in the photo-curing resin film; however, in order to prevent the photo-curing resin film from being broken due to a pressing force conferred from the light transmissive resin stamper or heat from the roller used for pressing, the thickness is preferably 5 µm or larger.

In this embodiment, a 4-layer optical information recording medium has been chiefly described by way of example; however, it is possible to obtain an information recording medium of a multi-layer structure having more layers by adjusting the thickness of the first information substrate, the respective information layers and the transparent layer or the like.

The multi-layer information recording medium of the invention obtained as has been described can be used as a recording medium of a shape that suits the purpose, for example, it may be shaped like a card, such as a memory card, in addition to the shape of an optical disc adopted in a CD, a DVD, a BD, etc.

### (Second Embodiment)

Because plural layers are formed in the thickness direction in a multi-layer information recording medium, higher dimensional accuracy than for a single-layer information recording medium in the related art is required.

However, because the information layer is multi-layered, it is relatively difficult to control dimensional accuracy, in particular, warpage, in comparison with the single-layer information recording medium in the related art.

According to the method for manufacturing the multi-layer information recording medium of the invention, it is possible to suppress warpage by adjusting the transferring conditions of the information grooves by means of the light transmissive resin stamper.

Also, in a case where a multi-layer information recording medium is manufactured using a first information substrate of a convex warped shape when placed with the information surface facing upward, it is possible to obtain an information recording medium having minor warpage.

The inventors studied various transferring conditions of the information grooves by means of the light transmissive resin stamper as a method for reducing warpage of the multi-layer information recording medium. As a result, it is found that a multi-layer information recording medium having minor warpage can be obtained by adjusting a temperature and a pressing force of the roller surface to fall within a specific range.

It is also found that when the resultant multi-layer information recording medium has warpage, the warpage can be corrected through annealing under particular conditions. It will be described the contents as follows.

### (Method of Reducing Warpage by Adjusting Temperature and Pressing Force of Roller Surface)

In the step of forming the information layer in the manufacturing method of the invention, when the information grooves of the light transmissive resin stamper are transferred by running the roller over the light transmissive resin stamper after the light transmissive resin stamper is placed onto the photo-curing resin sheet, depths of the transferred grooves obtained by varying a temperature and a pressing force of the roller surface were evaluated.

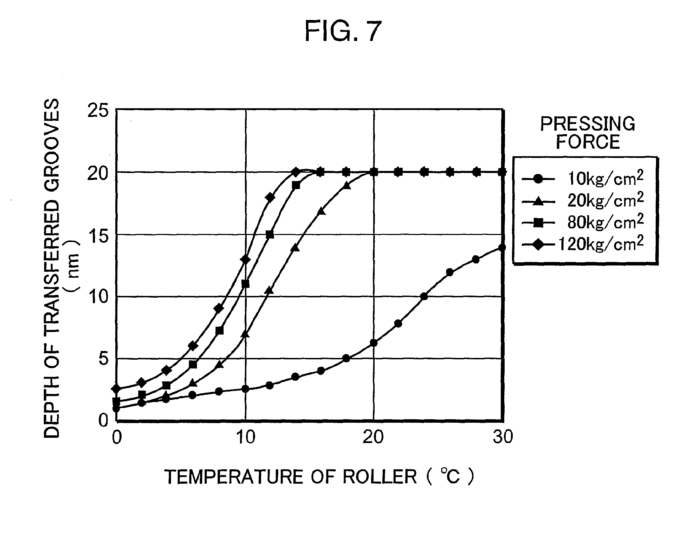

FIG. 7 shows a graph indicating the depths of the transferred grooves formed by varying the temperature and the pressing force of the roller.

In this study, a 1.1-mm-thick transparent substrate made of polycarbonate resin shaped like a disc having a diameter of 120 mm and provided with a center hole was used as the first information substrate. Also, a 20-µm-thick UV-curing resin film (UV tape available from Furukawa Electric Co. , Ltd.) made of a polyolefin resin base material, a photo-curing acrylic adhesive, etc. was used as the photo-curing resin film. In addition, a light transmissive resin stamper, provided with spiral grooves having a groove thickness of 20 nm, a groove width of 170 nm, and a track pitch of 0.32 µm as the transfer surface of the light transmissive resin stamper to transfer and form the second signal layer, was used.

FIG. 7 reveals that the transfer surface formed on the light transmissive resin stamper is transferred satisfactorily when the temperature and the pressing force of the roller are as high as or higher than 20°C and 20 kg/cm², respectively.

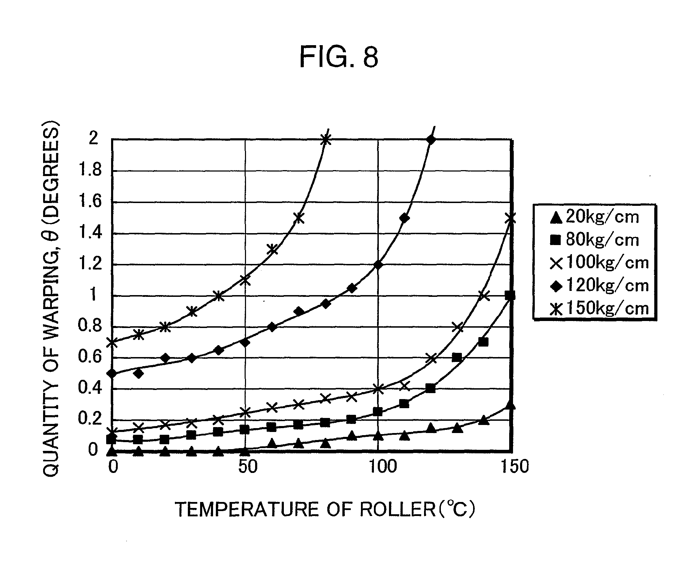

Meanwhile, FIG. 8 shows a graph indicating a quantity of warpage of the multi-layer information recording medium in a case where a recording medium, including four information layers containing three information layers formed using the photo-curing resin film in the information layer forming step, was manufactured by varying the temperature and the pressing force of the roller in various conditions in the same manner as above when the respective information layers were formed.

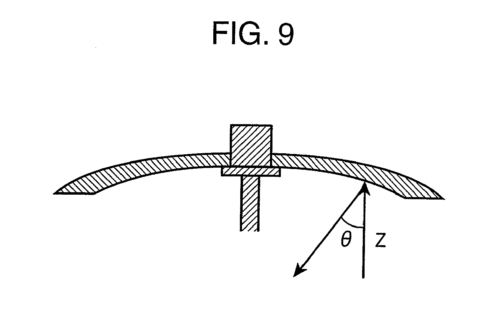

As is shown in FIG. 9, the quantity of warpage was evaluated by an angle (θ) produced between incident light and reflected light by fixing an information recording medium provided with the second signal layer to a seating having a diameter of 30 mm with the use of the center hole, and trapping reflected light when a laser beam was irradiated to the first information substrate on the surface on which the information grooves were formed. In this evaluation, among angles measured at 12 points equally spaced apart in the outer peripheral direction in the portion 1 mm inner from the outer edge toward the center, the largest value was defined as the angle (θ).

In the absence of warpage, θ = 0 , and θ increases with an increase of the quantity of warpage.

FIG. 8 reveals that warpage is significantly large when the pressing force is as high as or higher than 120 kg/cm², and a quantity of warpage is large when the temperature of the roller is as high as or higher than 100°C even when the pressing force is as high as or lower than 100 kg/cm². This is considered because the first information substrate per se would readily undergo deformation due to influences of stress relaxation and heat resistance of resin when the temperature of the roller exceeds 100°C.

By taking the results of FIG. 7 and FIG. 8 into account, it is understood that a multi-layer information recording medium having relatively good transfer accuracy and minor warpage can be obtained when the temperature of the roller is 20 to 100°C, or more preferably, 25 to 80°C, and the pressing force is 20 to 100 kg/cm², and more preferably 20 to 80 kg/cm².

### (Method of Reducing Warpage Using First Information Substrate Having a Convex Warped Shape)

According to the manufacturing method of the invention, respective information layers are formed by curing the photo-curing resin film after the photo-curing resin film is placed on the first information substrate, and the information grooves are formed in the photo-curing resin film by means of the light transmissive resin stamper. Also, the transparent layer formed on the outermost information layer is formed by applying a liquid of photo-curing resin by means of spread coating using the spin coat method followed by photo-curing.

Because the photo-curing resin film and a liquid of the photo-curing resin contract when they cure (hereinafter, referred to as contraction by curing), concave warpage occurs due to contraction by curing when a flat transparent resin substrate is used.

Hence, in order to obtain a multi-layer information recording medium having minor warpage, the concave warpage is cancelled out by using a first information substrate having in advance warpage in a convex shape (hereinafter, referred to also as convex warpage) when placed with the information surface facing upward. It is thus possible to obtain a multi-layer information recording medium having relatively high flatness.

The convex warpage is molded by adjusting various conditions of the injection (compression) molding, that is, a pressure and a rate of injection, a temperature of the cylinder, a temperature of the metal mold , a pressure of the metal mold , etc., when the first information substrate is manufactured. In this manner, the first information substrate having desired warpage can be obtained.

In this study, information layers are formed one by one by the manufacturing method of the invention on a disc-shaped first information substrate having in advance convex warpage, and a change in quantity of warpage when three information layers in total were formed using the photo-curing resin film was measured. The result is set forth in Table 1 below.

**Table 1**

| Layering Step | No Layer | First Layer | Second Layer | Third Layer | Transparent Layer |
|---|---|---|---|---|---|
| Quantity of Warpage θ (degree) | 1.0 | 0.8 | 0.5 | 0.3 | 0 |

A quantity of warpage, θ, of the first information substrate was θ = 1.0 degree before the information layers were layered; however, it was reduced to 0.8 degree when the first information layer comprising the photo-curing resin film was formed, then to 0.5 degree when the second layer was formed, to 0.3 degree when the third layer was formed, and θ was finally reduced to 0 when the transparent layer was formed by applying photo-curing resin on the information layer as the outermost layer by means of the spin coat method. A multi-layer information recording medium having little warpage was thus obtained.

As has been described, it is understood that warpage of the multi-layer information recording medium obtained finally can be controlled by forming the multi-layer information recording medium using the first information substrate having convex warpage in advance.

### (Method of Controlling Warpage through Annealing)

A method of controlling warpage through annealing will now be described.

It is preferable for the multi-layer information recording medium obtained by the manufacturing method of the invention to control a quantity of warpage by performing annealing as a post-treatment step, so that warpage, distortion and the like are eliminated by relaxing an internal stress.

In this study, as in the study of the method of reducing warpage using the first information substrate having a convex warped shape, a quantity of warpage was measured when an information recording medium having four information layers was manufactured by forming information layers one by one by the manufacturing method of the invention on the disc-shaped first substrate 101 having in advance convex warpage until three information layers in total were formed using the photo-curing resin film 604 and by further providing a transparent layer.

In this embodiment, a convex first information substrate having a quantity of warpage, θ = 0.5 degree, was used by taking into account that annealing is performed after the multi-layer information recording medium is manufactured. A change in quantity of warpage, θ, when three layers were formed sequentially using the photo-curing resin film 604 with respect to the first information substrate 101 is set forth in Table 2.

**Table 2**

| Layering Step | No Layer | First Layer | Second Layer | Third Layer | Transparent Layer |
|---|---|---|---|---|---|
| Quantity of Warpage θ (degree) | 0.5 | 0.3 | 0 | -0.3 | -0.5 |

In a case where a multi-layer information recording medium having four layers was manufactured using a convex first information substrate having a quantity of warpage, θ = 0.5 degree, the multi-layer information recording medium obtained finally had a convex shape with a quantity of warpage, θ = -0.5 degree, that is, a concave multi-layer information recording medium having θ = 0.5 degree, was obtained.

As has been described, when a quantity of warpage of the convex first information substrate is small, it is possible to obtain a concave multi-layer information recording medium through contraction by curing of the heat-curing resin.

The resultant multi-layer information recording medium having a quantity of warpage, θ = -0.5 degree, was subjected to annealing for the processing times and under processing conditions set forth in Table 3 below.

A difference in quantity of warpage, (θ), between a quantity of warpage of the multi-layer information recording medium having undergone annealing and a pre-measured quantity of warpage of the multi-layer information recording medium before annealing was compared in accordance with an equation as follows.

(A quantity of warpage after annealing, (θ2)) - (a quantity of warpage before annealing, (θ1))

**Table 3**

| Difference of Quantity of Warpage (θ) | | | | | | | |
|---|---|---|---|---|---|---|---|
| Processing Temperature (°C) | | 50 | 60 | 70 | 80 | 90 | 100 |
| Processing Time (min.) | 30 | 0 | 0.1 | 0.1 | 0.3 | X | X |
| | 60 | 0 | 0.2 | 0.3 | 0.4 | X | X |
| | 90 | 0.1 | 0.2 | 0.4 | 0.4 | X | X |
| | 120 | 0.1 | 0.3 | 0.4 | 0.5 | X | X |
| | 150 | 0.1 | 0.3 | 0.4 | 0.5 | X | X |
| | 180 | 0.1 | 0.3 | 0.4 | 0.5 | X | X |

The result set forth in Table 3 above reveals that a difference in quantity of warpage, (θ), is 0.5 degree when the medium was annealed at 80°C for 120 to 180 min, and thus, a multi-layer information recording medium having a quantity of warpage, θ, of -0.5 degree before annealing can be changed to a flat multi-layer information recording medium having substantially no warpage, θ = 0.

On the other hand, when the medium was annealed at 90°C or above, significant distortion (indicated by X in Table 3 above) was observed in the first information substrate per se for all the processing times.

It is understood from the result as described above that when warpage occurs in the multi-layer information recording medium before annealing, the warpage can be corrected by subjecting the medium to annealing, and it is thus possible to obtain a flat multi-layer information recording medium.

### INDUSTRIAL APPLICABILITY

According to the multi-layer information recording medium of the invention and the method for manufacturing the same, a single recording medium has a number of information layers, which is effective as an optical disc or the like. In addition, the multi-layer information recording medium of the invention and the method fot manufacturing the same are also applicable to an information card or the like.

## Claims

1. A method for manufacturing a multi-layer information recording medium, comprising:
a first step of covering a first information surface of a substrate having the first information surface with a first thin-film layer;
a second step of placing a photo-curing resin film on the first thin-film layer, and placing a light transmissive resin stamper on the film followed by pressing;
a third step of curing the photo-curing resin film by allowing light to pass through via the light transmissive resin stamper;
a fourth step of forming a second information surface by stripping the light transmissive resin stamper from the cured photo-curing resin film; and
a fifth step of forming an information layer by covering the second information surface formed in the fourth step with a second thin-film layer,
wherein the light transmissive resin stamper has a transfer surface for forming the second information surface, and a metal thin film is formed on the transfer surface.

2. The method for manufacturing a multi-layer information recording medium according to Claim 1, wherein:
plural information layers are formed on the substrate by repeating the second through fifth steps more than once on the second thin-film layer formed in the fifth step.

3. The method for manufacturing a multi-layer information recording medium according to Claim 1 or 2, further comprising:
a step of forming a transparent layer on an outermost thin-film layer formed in the fifth step.

4. The method for manufacturing a multi-layer information recording medium according to Claim 1, wherein:
in the second step, after the photo-curing resin film is placed on the thin-film layer and laminated to the thin-film layer by pressing, the light transmissive resin stamper is placed on the film , and then , the light transmissive resin stamper is pressed.

5. The method for manufacturing a multi-layer information recording medium according to Claim 1, wherein:
in the second step, the light transmissive resin stamper is pressed after the photo-curing resin film and the light transmissive resin stamper are placed on the thin-film layer.

6. The method for manufacturing a multi-layer information recording medium according to Claim 1, wherein:
UV ray transmittance of the light transmissive resin stamper is 5 to 80%.

7. The method for manufacturing a multi-layer information recording medium according to Claim 1, wherein:
a thickness of the metal thin film formed on the light transmissive resin stamper is 5 to 50 nm.

8. The method for manufacturing a multi-layer information recording medium according to Claim 1, wherein:
the light transmissive resin stamper is formed by providing a stamper made of polycarbonate resin with a metal thin film having a thickness that allows transmission of UV rays.

9. The method for manufacturing a multi-layer information recording medium according to Claim 1, wherein:
the metal thin film formed on the light transmissive resin stamper contains silver (Ag) or aluminum (Al)as a main component.

10. The method for manufacturing a multi-layer information recording medium according to Claim 3, wherein:
the transparent layer is formed to seal the information layers formed between the transparent layer and the substrate having the first information surface.

11. The method for manufacturing a multi-layer information recording medium according to Claim 3, wherein:
the photo-curing resin film to be used is smaller than an outer edge of the substrate having the first information surface and an outer edge of the transparent layer.

12. The method for manufacturing a multi-layer information recording medium according to Claim 3, wherein:
the multi-layer information recording medium has two or more information layers each being formed of the photo-curing resin film, an outer edge of the photo-curing resin films each is made smaller than an outer edge of the substrate having the first information surface and an outer edge of the transparent layer, and the outer edge of the photo-curing resin films each is made smaller with distances from the substrate having the first information surface.

13. The method for manufacturing a multi-layer information recording medium according to Claim 3, wherein:
the substrate having the first information surface has a disc-like shape provided with a center hole, the photo-curing resin film has a disk-like shape provided with a center hole, an inside diameter of the photo-curing resin film is made larger than an inside diameter of the substrate having the first information surface, and the transparent layer is formed extensively onto the substrate having the first information surface that is placed medially in the center hole of the photo-curing resin film.

14. The method for manufacturing a multi-layer information recording medium according to Claim 13, wherein:
the inside diameter of the photo-curing resin films each is made larger with distances from the substrate.

15. The method for manufacturing a multi-layer information recording medium according to Claim 13, wherein:
an outside diameter of the photo-curing resin films each is made smaller than an outside diameter of the substrate having the first information surface and an outside diameter of the transparent layer, and the outside diameter of the photo-curing resin films each is made smaller with distances from the substrate having the first information surface.

16. The method for manufacturing a multi-layer information recording medium according to Claim 1, wherein:
the substrate having the first information surface to be used is of a convex warped shape when placed with the information surface facing upward.

17. The method for manufacturing a multi-layer information recording medium according to Claim 1, wherein:
in the second step of placing the photo-curing resin film on the thin-film layer and placing the light transmissive resin stamper thereon followed by pressing, the stamper is pressed by a roller having a surface temperature of 20 to 100°C at 20 to 100 kg/cm².

18. The method for manufacturing a multi-layer information recording medium according to Claim 1, wherein:
in the second step of placing the photo-curing resin film on the thin-film layer and placing the light transmissive resin stamper thereon followed by pressing, the stamper is pressed by a roller having a surface temperature of 25 to 80°C at 20 to 80 kg/cm².

19. The method for manufacturing a multi-layer information recording medium according to Claim 1, further comprising:
a step of annealing.

20. A multi-layer information recording medium obtained by the method for manufacturing the multi-layer information recording medium according to Claim 1.

21. The multi-layer information recording medium according to Claim 20, wherein:
four information layers are included, and a thickness of each information layer is 5 to 25 µm.

22. The multi-layer information recording medium according to Claim 20, wherein:
four information layers are included, and a thickness of the medium is 1.16 to 1.5 mm.
